# EUROPEAN PATENT APPLICATION

(11) **EP 1 038 424 A1**
(43) Date of publication of application: **27.09.2000**
(21) Application number: 00200952.0
(22) Date of filing: 16.03.2000
(51) Int. Cl.: A01B 45/00, A01C 23/02

(54) **Method and device for in caterpillar shape applying foaming agent in the turf**

(30) Priority: 19.03.1999 NL 1011611
(71) Applicant: VREDO BEHEER B.V., NL-6669 DJ Dodewaard (NL)
(72) Inventor: De Vree, Johannes, 6669 DJ Dodewaard (NL)
(74) Representative: Hoorweg, Petrus Nicolaas

(57) **Abstract**

A method and device for arranging in a turf layer a turf-alien substance (K) by means of slits (S) opening at the top and formed parallel to each other in this turf layer, which slits (S) are preferably formed by a member (7) with a cleaving edge insertable into the turf layer, such as two discs standing at an angle to each other such that during movement over the turf a narrow slit (S) is formed, wherein the turf-alien substance (K) is laid in foam-like form and in caterpillar form behind the cleaving member on or close to the bottom of the slit (S).

## Description

The invention relates to a method for arranging in a turf layer a turf-alien substance by means of slits opening at the top and formed parallel to each other in this turf layer, into which slits the material is introduced to improve or maintain the turf quality.

It is generally known to arrange a liquid animal manure into the turf layer for manuring with the purpose of limiting the ammonia impact by arranging mutually parallel slits in these turf layers and then pouring the liquid manure therein.

For particular turf layers such as sports fields, golf courses and the like such turf-manuring is not desirable, and it will be wished to treat the turf layers differently in order to maintain or improve the desired quality thereof.

The invention proposes for this purpose a method which is distinguished in that the turf-alien substance is laid in foam-like form and in caterpillar form on or close to the bottom of the slit.

The foam material, for instance aminoplast, such as urea formaldehyde, has the property of longer water-retention, whereby the turf quality can be maintained or improved for a longer period. By adding a hardener, if desired, to the still fluid foam material the caterpillar will undergo a volume increase during hardening and become porous, which increases the moisture-absorption capacity.

The foam can also be provided with a growth-enhancing component for the turf and/or herbicides/ pesticides.

The caterpillar can also be arranged according to the invention in interrupted manner in a continuous slit or in an interrupted slit.

If desired, the slit can also be closed in mechanical manner according to the invention after arranging of the foam caterpillar.

The invention further relates to a device which is distinguished in that the slit-forming means are formed by at least one standing plate-like member provided with a cleaving edge oriented in the direction of forward movement for forming the slit opening to the top, wherein the end of the feed line debouches behind the slit-forming member relative to the direction of movement.

The standing slit-forming means is preferably an optionally driven rotatable disc or knife, wherein pairwise disposed discs or knives can also be used.

The invention will be further elucidated in the figure description hereinbelow of an embodiment. In the drawing:
figure 1 shows a side view of a foam-introducing device according to the invention; and
figure 2 shows a perspective rear view of the preferred embodiment of the foam-introducing device with two discs.

The device according to the invention comprises a frame 1 which is movable forward over the turf in the direction of arrow P1 and which bears a sub-frame 2 in addition to a supply container 3. Sub-frame 2 is provided with a slit-forming member 4 in the form of a free-rotating disc which is rotatable on a shaft 5 in the direction of arrow P2. Shaft 5 is pressed downward with a determined force into the turf layer such that the peripheral edge 7 is pressed a determined distance "a" into the turf while splitting open this turf layer to form a slit which opens to the top. Arranged behind slit-forming member 4 is a feed tube 8 which is connected to a feed hose 9 which is connected via a distributor head 10 to a central feed line 11 which is supplied via a pump 12 with liquid foaming agent from supply container 3.

A supply container 15 for the hardener is provided with a feed line 16 which leads to a nozzle 17 arranged in tube 8.

The device operates as follows:

As frame 1 moves forward, supported here by a travel wheel L, for instance by means of an agricultural tractor (not shown), a slit S is formed in the turf layer by the slit-forming meters 7, a number of which are disposed adjacently of each other. From a supply of foam material via pump 12 the material is placed in slit S in caterpillar form via lines 11, 9, 8 optionally continuously or in interrupted manner. The hardener which is added in tube 8 will cause the foam material to harden and preferably swell to a porous mass.

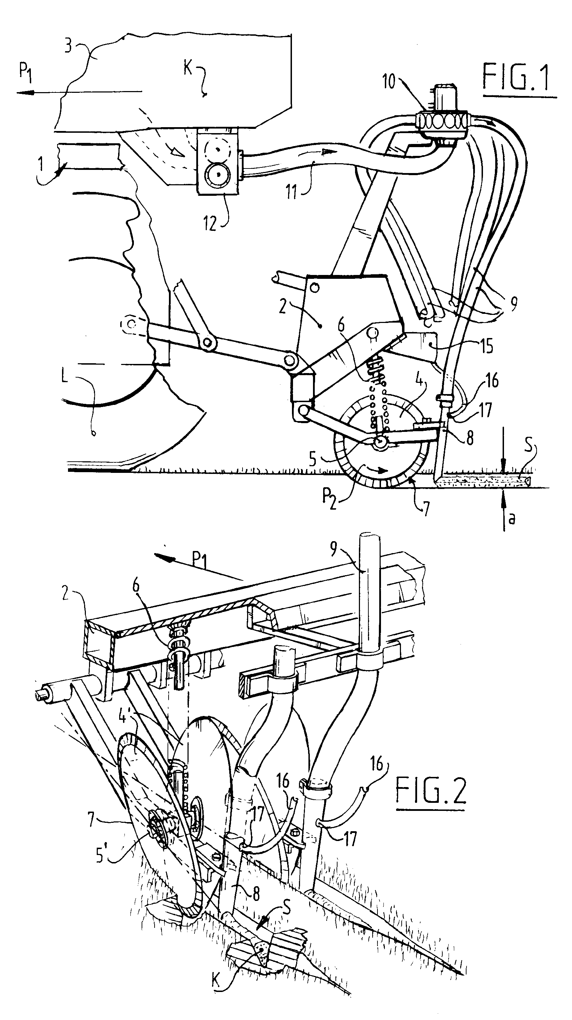

Figure 2 shows a preferred embodiment wherein sub-frame 2 is provided with a number of pairs of discs 7' lying at an angle, which pairs of discs rotate on a shaft 5', each of which enclose an angle with the co-acting rotation shaft 5' of the adjacently located disc. The disposition is such that the leading edge of both discs 4' together cleave a slit S in the turf layer. Here also a feed tube 8 for the foam is arranged closely behind each pair of discs which leaves behind a caterpillar-like trail K of foam material.

This device also lays a caterpillar-like trail of foam material in slit S under the surface of the turf.

The invention is not limited to the above described embodiments. The V-shaped slit can thus also be U-shaped by means of a modified disc cross-section, or have an angled slit wall.

The shown discs can also be replaced by standing coulter plates which pull a slit-like track in the turf layer.

The foam material can be of random composition, for instance consist of two components which, when combined, produce a hardening phenomenon. Supply container 3 does not have to be placed on frame 1 but can be placed in stationary position on the turf layer.

## Claims

1. Method for arranging in a turf layer a turf-alien substance by means of slits opening at the top and formed parallel to each other in this turf layer, **characterized in that** the turf-alien substance is laid in foam-like form and in caterpillar form on or close to the bottom of the slit.

2. Method as claimed in claim 1, **characterized in that** the foam material is arranged as an interrupted caterpillar.

3. Method as claimed in claim 1, **characterized in that** the caterpillar is arranged continuously in the slit.

4. Method as claimed in any of the foregoing claims, **characterized in that** the turf layer undergoes a further working such that the formed slit is more or less closed.

5. Device for performing the method as claimed in any of the foregoing claims, comprising a frame movable over the turf, a number of slit-forming means carried by the frame, a supply container for the foam material and one or more feed lines extending from the supply container to the slit-forming means, **characterized in that** the slit-forming means are formed by at least one standing plate-like member provided with a cleaving edge oriented in the direction of forward movement for forming the slit opening to the top, wherein the end of the feed line debouches behind the slit-forming member relative to the direction of movement.

6. Device as claimed in claim 5, **characterized in that** the slit-forming member is embodied as standing coulter.

7. Device as claimed in claim 6, **characterized in that** the slit-forming member is embodied as at least one optionally driven rotatable disc or knife.

8. Device as claimed in claim 7, **characterized in that** the slit-forming member is embodied as a pair of discs, the rotation shafts of which enclose an angle to each other, and the peripheral edge of the discs approach each other on the downward pointing leading side thereof in the direction of movement.

9. Device as claimed in any of the claims 5-8, **characterized in that** the feed nozzle for the hardener is arranged close to the end of the feed line for the foam material.
